# EUROPÄISCHE PATENTSCHRIFT

(11) **EP 2 134 793 B1**
(45) Veröffentlichungstag und Bekanntmachung des Hinweises auf die Patenterteilung: **11.07.2012**
(21) Anmeldenummer: 08715877.0
(22) Anmeldetag: 20.02.2008
(51) Int. Cl.: C09B 57/00, C09B 67/08, C09D 5/00, G02B 5/22, C09B 67/22

(54) **VERFAHREN ZUR DIREKTEN HERSTELLUNG FEINTEILIGER DIKETOPYRROLOPYRROLPIGMENTE**
METHOD FOR DIRECTLY PRODUCING FINE-PARTICLE DIKETOPYRROLOPYRROL PIGMENTS
PROCÉDÉ DE PRODUCTION DIRECTE DE PIGMENTS DE DICÉTOPYRROLOPYRROLE À FINES PARTICULES

(30) Priorität: 07.03.2007 DE 102007011068
(43) Veröffentlichungstag der Anmeldung: 23.12.2009
(73) Patentinhaber: Clariant Finance (BVI) Limited, Road Town, Tortola (VG)
(72) Erfinder: GANSCHOW, Matthias, 65195 Wiesbaden (DE)
(74) Vertreter: Hütter, Klaus
(86) Internationale Anmeldenummer: PCT/EP2008/001306
(87) Internationale Veröffentlichungsnummer: WO 2008/107073

(56) Entgegenhaltungen:
- EP-A- 0 640 603
- EP-A- 0 640 604
- EP-A- 0 962 499
- EP-A- 1 104 789
- EP-A- 1 162 240
- WO-A-03/022848
- DE-A1- 10 106 147
- JP-A- 1 217 077
- JP-A- 3 026 767
- WALLQUIST O: "Diketopyrrolopyrrole (DPP) pigments" HIGH PERFORMANCE PIGMENTS, WILEY-VCH, DE, 1. Januar 2002 (2002-01-01), Seiten 159-184, XP009088835

## Beschreibung

Pigmentdispergatoren sind mit spezifisch wirksamen Gruppen substituierte Pigmente. Die Pigmentdispergatoren werden den Pigmenten meist nachträglich zugesetzt, um die Dispergierung in den Anwendungsmedien, insbesondere in Lacken, Druckfarben und Tinten zu erleichtern und um die rheologischen und coloristischen Eigenschaften der Pigmente zu verbessern. Dadurch kann beispielsweise die Farbstärke, die Transparenz und der Glanz in vielen Anwendungen erhöht werden.
Beispielsweise zur Herstellung von Farbfiltern werden besonders feinteilige Pigmente eingesetzt, um die Partikel-Streuung, die zu einer Herabsetzung des Kontrastverhältnisses führt, weitgehend auszuschließen.

WO 01/04215 offenbart feinteilige Diketopyrrolopyrrolpigmente, die durch eine besonders enge Teilchengrößenverteilung gepaart mit hoher Kristallinität und einer speziellen Absorptionscharakteristik gekennzeichnet sind. Ein solches C.I. Pigment Red 254 kann erhalten werden, indem ein Rohpigment zunächst mit einem anorganischen Salz trocken bei mindestens 80 °C gerührt und anschließend einem Knetprozess mit anorganischen Salzen in Gegenwart von organischen Lösungsmitteln ausgesetzt wird.
Die EP-A-0 962 499 beschreibt eine Synthese von Diketopyrrolopyrrol-Pigmenten, wobei die Ringschlussreaktion in Gegenwart von Kristallwachstumsinhibitoren durchgeführt wird.
Basierend auf diesen bekannten Verfahren sind Handelsprodukte erhältlich, die für Anwendungen, in denen hohe Transparenz erforderlich ist, beispielsweise in Farbfiltern, empfohlen werden.
Dennoch genügen diese Pigmente nicht immer allen Anforderungen der Technik. Insbesondere bestand noch ein Verbesserungsbedarf hinsichtlich der Transparenz, Dispergierbarkeit und Rheologie.

Es bestand die Aufgabe, ein Verfahren zu entwickeln, aus dem DPP-Pigmente ohne Nachbehandlung, wie Mahlung oder Salzknetung, aus der Synthese erhalten werden, die hohe Farbstärke, hohe Transparenz und niedrige Viskosität aufweisen und insbesondere für Farbfilteranwendungen oder hochtransparente Einfärbungen geeignet sind.

Es wurde gefunden, dass aus dem nachstehend beschriebenen Verfahren Pigmente mit hoher Farbstärke, hoher Transparenz und niedriger Viskosität erhalten werden.

Gegenstand der Erfindung ist ein Verfahren zur direkten Herstellung von feinteiligen 1,4-diketopyrrolo[3,4-c]pyrrolen der Formel (I), gekennzeichnet durch ein Maximum der Häufigkeitsverteilung der kristallinen Teilchen (Mode der Verteilung) zwischen 30 und 130 nm, bevorzugt zwischen 40 und 125 nm, 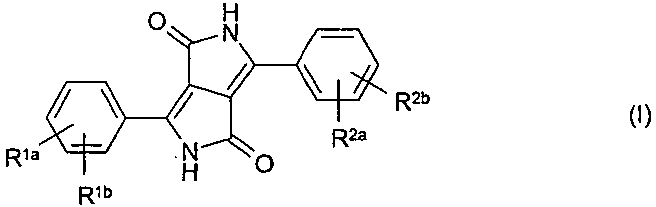 worin R^{1a}, R^{1b}, R^{2a} und R^{2b} unabhängig voneinander Wasserstoff, Halogen, wie beispielsweise Chlor oder Brom, C₁-C₄-Alkyl, wie beispielsweise Methyl, Ethyl oder tert.-Butyl, C₁-C₄-Alkoxy, wie beispielweise Methoxy, Cyano oder Phenyl bedeuten; durch Umsetzung von

1 Mol eines Bernsteinsäuredicyclohexylesters, -dialkylesters, -monoalkylmonophenylesters, oder -diphenylesters, wobei im Bernsteinsäurerest Alkyl C₁-C₁₈-Alkyl und Phenyl unsubstituiertes oder durch ein oder zwei C₁-C₆-Alkyl- oder C₁-C₆-Alkoxygruppen substituiertes Phenyl bedeuten, mit 2 Mol eines Gemisches von Nitrilen der Formeln R^{1a}R^{1b}C₆H₃-CN und R^{2a}R^{2b}C₆H₃-CN, worin R^{1a}, R^{1b}, R^{2a} und R^{2b} die vorstehend angegebene Bedeutung haben, wobei im Nitrilgemisch R^{1a}R^{1b}C₆H₃-CN und R^{2a}R^{2b}C₆H₃-CN im Molverhältnis 100:0 bis 50:50 zueinander stehen;
oder durch Umsetzung von 1 Mol eines Lactams der Formel (III) oder eines Enamins der Formel (IV), 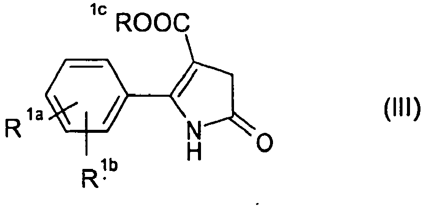 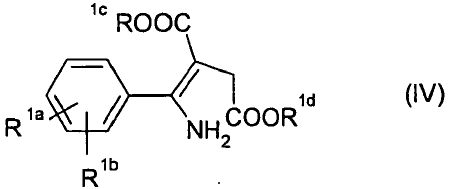 mit einem Mol eines Nitrils der Formel R^{2a}R^{2b}C₆H₃-CN; worin R^{1a}, R^{1b}, R^{2a} und R^{2b} die vorstehend angegebene Bedeutung haben und R^{1c} und R^{1d} Alkyl oder Aryl, bevorzugt C₁-C₁₈-Alkyl oder C₆-C₁₀-Aryl, bedeuten;
in einem inerten organischen Lösungsmittel in Gegenwart eines Alkalimetalls oder eines Alkalimetallalkoholats als starke Base bei erhöhter Temperatur zu einem Pigmentalkalisalz,
anschließende Freisetzung einer Verbindung der Formel (I) durch Protolyse, welche dadurch gekennzeichnet ist, dass das Pigmentalkalisalz zu einem flüssigen Protolysemedium, in dem ein Pigmentdispergator der Formel (II) gelöst oder suspediert ist, gegeben wird und wobei die Menge des zugesetzten Pigmentdispergators der Formel (II) mindestens 0,05 Gew.-%, bezogen auf das Gewicht des Pigments der Formel (I), beträgt; der Pigmentdispergator hab die folgende Formel 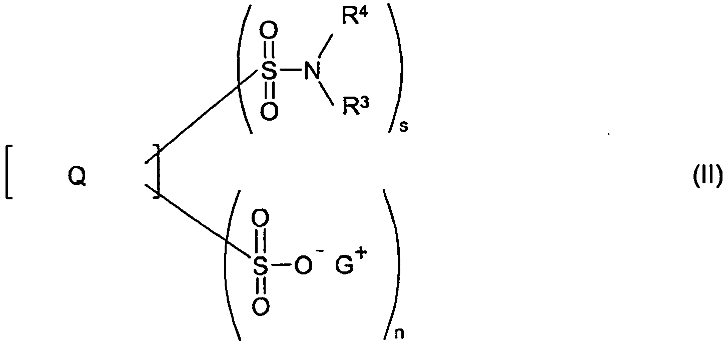 worin
- Q: ein Rest eines organischen Pigments aus der Gruppe der Perinon-, Chinacridon-, Chinacridonchinon-, Anthanthron-, Indanthron-, Dioxazin-, wie beispielsweise Triphendioxazine, Diketopyrrolopyrrol-, Indigo-, Thioindigo-, Thiazinindigo-, Isoindolin-, Isoindolinon-, Pyranthron-, Isoviolanthron-, Flavanthron- oder Anthrapyrimidin-Pigmente ist;
- s: eine Zahl von 1 bis 5, vorzugsweise 1 bis 3, darstellt;
- n: eine Zahl von 0 bis 4, vorzugsweise 0,1 bis 2, darstellt; wobei die Summe von s und n 1 bis 5 beträgt;
- R³: einen verzweigten oder unverzweigten, gesättigten oder ungesättigten, aliphatischen Kohlenwasserstoffrest mit 1 bis 20 C-Atomen, oder einen C₅-C₇-Cycloalkylrest, oder einen araliphatischen oder aromatischen Rest mit 1, 2 oder 3 aromatischen Ringen, wobei die Ringe kondensiert vorliegen oder durch eine Bindung verknüpft sein können, oder einen heterocyclischen Rest mit 1, 2 oder 3 Ringen, enthaltend 1, 2, 3 oder 4 Heteroatome aus der Gruppe O, N und S, oder eine Kombination davon bedeutet; wobei die genannten Kohlenwasserstoff-, Cycloalkyl-, Aromaten-, Araliphaten- und Heteroaromaten-Reste durch 1, 2, 3 oder 4 Substituenten aus der Gruppe OH, CN, F, Cl, Br, NO₂, CF₃, C₁-C₆-Alkoxy, S-C₁₋C₆-Alkyl, NHCONH₂, NHC(NH)NH₂, NHCO-C₁-C₆-Alkyl, C₁-C₆-Alkyl, CONR⁵R⁶, NR⁵R⁶, SO₂-NR⁵R⁶, substituiert sein können, wobei R⁵ und R⁶ gleich oder verschieden sind und Wasserstoff, Phenyl oder C₁-C₆-Alkyl bedeuten;
- R⁴: Wasserstoff oder R³ bedeutet;
- G⁺: H⁺ oder das Äquivalent M^{p+}/m eines Metallkations M^{p+} aus der 1. bis 5. Hauptgruppe oder aus der 1. oder 2. oder der 4. bis 8. Nebengruppe des Periodensystems der chemischen Elemente bezeichnet, wobei m eine der Zahlen 1, 2 oder 3 und p die Zahl 1, 2 oder 3 bedeutet; oder ein substituiertes oder unsubstituiertes Ammoniumion bezeichnet.

Für den Fall, dass G⁺ ein Ammoniumion darstellt, kommen dafür in Betracht:
(i) NR⁷R⁸R⁹R¹⁰, wobei die Substituenten R⁷, R⁸, R⁹ und R¹⁰ unabhängig voneinander jeweils ein Wasserstoffatom, C₁-C₃₀-Alkyl, C₂-C₃₀-Alkenyl, C₅-C₃₀-Cycloalkyl, Phenyl, (C₁-C₈)-Alkyl-phenyl, (C₁-C₄)-Alkylen-phenyl, oder eine (Poly)alkylenoxy-gruppe der Formel -[CH(R¹¹)-CH(R¹¹)-O]ₖ-H sind, in der k eine Zahl von 1 bis 30 ist und die beiden Reste R¹¹ unabhängig voneinander Wasserstoff, C₁-C₄-Alkyl oder, sofern k > 1 ist, eine Kombination davon bedeuten; und worin als R⁷, R⁸, R⁹ und/oder R¹⁰ ausgewiesenes Alkyl, Alkenyl, Cycloalkyl, Phenyl oder Alkylphenyl durch Amino, Hydroxy, und/oder Carboxy substituiert sein können;
   oder wobei die Substituenten R⁷ und R⁸ zusammen mit dem quartären N-Atom ein fünf- bis siebengliedriges gesättigtes Ringsystem, das ggf. noch weitere Heteroatome aus der Gruppe O, S und N enthält, bilden können;
   oder wobei die Substituenten R⁷, R⁸ und R⁹ zusammen mit dem quartären N-Atom ein fünf- bis siebengliedriges aromatisches Ringsystem, das ggf. noch weitere Heteroatome aus der Gruppe O, S und N enthält und an dem ggf. zusätzliche Ringe ankondensiert sind, bilden können;
   oder
(ii) ein Ammoniumion der Formel (IIIa), 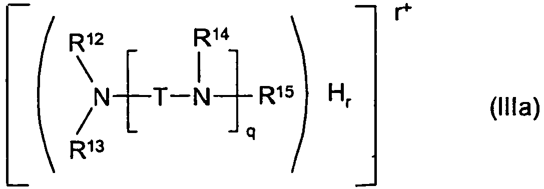 worin
   - R¹², R¹³, R¹⁴ und R¹⁵: unabhängig voneinander Wasserstoff oder eine (Poly)alkylenoxygruppe der Formel -[CH(R¹¹)-CH(R¹¹)O]ₖ-H bedeuten, in der k und R¹¹ die oben genannte Bedeutung haben;
   - q: eine Zahl von 1 bis 10;
   - r: eine Zahl von 1 bis 5, wobei r≤ q+1 ist;
   - T: einen verzweigten oder unverzweigten C₂-C₆-Alkylenrest bedeutet; oder worin T, wenn q > 1 ist, auch eine Kombination von verzweigten oder unverzweigten C₂-C₆-Alkylenresten sein kann.

In bevorzugten Pigmentdispergatoren der Formel (II) bedeutet
- Q: ein Rest eines organischen Pigments aus der Gruppe der Chinacridon-, Dioxazin- oder Diketopyrrolopyrrol-Pigmente;
- R³: C₁-C₆-Alkyl, Benzyl, Phenyl, die jeweils durch 1, 2, 3 oder 4 Substituenten aus der Gruppe OH, C₁-C₆-Alkoxy, S-C₁-C₆-Alkyl, NHCONH₂, NHC(NH)NH₂, NHCO-C₁-C₆-Alkyl, C₁-C₆-Alkyl, CONR⁵R⁶, NR⁵R⁶, SO₂-NR⁵R⁶, substituiert sein können, wobei R⁵ und R⁶ gleich oder verschieden sind und Wasserstoff, Phenyl oder C₁-C₆-Alkyl bedeuten;
- R⁴: Wasserstoff,
- G⁺: Wasserstoff, ein Erdalkalimetall oder ein Alkalimetall oder ein Metall der dritten Hauptgruppe, insbesondere Li, Na, K, Ca, Sr, Ba, Al oder ein Ammoniumion.

In besonders bevorzugten Pigmentdispergatoren der Formel (II) bedeutet
- Q: ein Rest eines organischen Pigments aus der Gruppe der Diketopyrrolopyrrol-Pigmente, bevorzugt das P.R. 255 oder das P.R. 264
- R³: C₁-C₆-Alkyl, das durch 1, 2, 3 oder 4 Substituenten aus der Gruppe NHCONH₂, NHC(NH)NH₂, NHCO-C₁-C₆-Alkyl, NR⁵R⁶, substituiert sein kann, wobei R⁵ und R⁶ gleich oder verschieden sind und Wasserstoff, Phenyl oder C₁-C₆-Alkyl bedeuten;
- R⁴: Wasserstoff,
- G⁺: Wasserstoff, ein Erdalkalimetall oder ein Alkalimetall oder ein Metall der dritten Hauptgruppe, insbesondere Li, Na, K, Ca, Sr, Ba, Al oder ein Ammoniumion.

Die Pigmentdispergatoren der Formel (II) sind an sich bekannte Verbindungen und lassen sich nach bekannten Verfahren herstellen, z.B. nach EP-A-1 104 789, JP 03026767 oder WO 02/064 680.

Besonders bevorzugt sind Pigmente der Formel (I) mit
R^{1b} und R^{2b} jeweils Wasserstoff, und
R^{1a} und R^{2a} sind gleich oder verschieden und bedeuten Wasserstoff, Methyl, tert.-Butyl, Chlor, Cyano oder Phenyl.

Beispiele für bevorzugte Pigmente der Formel (I) sind C.I. Pigment Orange 71, 73, 81, Pigment Red 254, 255, 264, 270, 272.

Zur Protolyse der entstandenen Pigmentsalzsuspension kann man Wasser oder eine Mischung aus Wasser mit einem Alkohol mit 1 bis 4-C-Atomen, wie Methanol oder Ethanol, und oder einer Säure verwenden. Als Säuren kommen zum Beispiel aliphatische oder aromatische Carbon- oder Sulfosäuren in Betracht, wie beispielsweise Ameisensäure, Essigsäure, Propionsäure, Oxalsäure, Benzoesäure oder Benzolsulfonsäure. Weiterhin kommen als Säure auch Mineralsäuren in Betracht, wie Salzsäure, Schwefelsäure oder Phosphorsäure. Besonders bevorzugt ist neutrales Wasser, eine Mischung von Methanol und Wasser oder Wasser bei pH < 5.

Das Gewichtsverhältnis von Pigment der Formel (I) zum Pigmentdispergator der Formel (II) ist bevorzugt zwischen (99,9 zu 0,1) und (80 zu 20), besonders bevorzugt zwischen (97 zu 3) und (83 zu 17) und ganz besonders bevorzugt zwischen (95 zu 5) und (85 zu 15).

Eine "direkte" Herstellung feinteiliger Pigmente meint, dass die aus dem erfindungsgemäßen Verfahren erhaltenen Pigmente bereits ausreichend feinteilig und auch gut dispergierbar sind und keinen nachfolgenden Zerkleinerungsschritt mehr benötigen.
Die Synthese bis zum Pigmentalkalisalz kann nach bekannten Methoden und den üblichen Bedingungen erfolgen, wie z.B. in der EP-A-0 962 499 beschrieben.
Die Protolyse in Gegenwart des Pigmentdispergators (II) wird zweckmäßigerweise bei einer Temperatur des Pigmentalkalisalzes von 20 bis 120 °C, vorzugsweise 40 bis 90 °C durchgeführt. Das flüssige Protolysemedium hat dabei vorzugsweise eine Temperatur von 0 bis 60 °C, insbesondere 0 bis 30 °C.
Die Menge des Protolysemediums muß so bemessen sein, dass eine vollständige Protolyse des Pigmentalkalisalzes und des eingesetzten Alkoholates gewährleistet ist. Zweckmäßigerweise arbeitet man in einem größeren Überschuß an Protolysemedium.

Im Verlauf des erfindungsgemäßen Verfahrens oder im Anschluß können noch weitere übliche Hilfsmittel oder Zusatzstoffe zugesetzt werden, wie beispielsweise Tenside, Dispergiermittel, Füllstoffe, Stellmittel, Harze, Wachse, Entschäumer, Antistaubmittel, Extender, Antistatika, Konservierungsmittel, Trocknungsverzögerungsmittel, Netzmittel, Antioxidantien, UV-Absorber und Lichtstabilisatoren, vorzugsweise in einer Menge von 0,1 bis 10 Gew.-%, insbesondere 0,5 bis 5 Gew.-%, bezogen auf das Gesamtgewicht des Pigments.

Als Tenside kommen anionische oder anionaktive, kationische oder kationaktive und nichtionische oder amphotere Substanzen oder Mischungen dieser Mittel in Betracht.
Als Beispiele für derartige Tenside können die in der Internationalen Anmeldung PCT/EP 2006/008866 beschriebenen Verbindungsklassen gelten.

Die erfindungsgemäß hergestellte Pigmentzubereitung kann als vorzugsweise wässriger Presskuchen, Trockenpulver oder Trockengranulat zum Einsatz kommen, in der Regel handelt es sich jedoch um feste Systeme von pulverförmiger Beschaffenheit.

Bei der Trocknung einer feuchten Pigmentzubereitung können die bekannten Trockenaggregate zum Einsatz kommen, wie Trockenschränke, Schaufelradtrockner, Taumeltrockner, Kontakttrockner und insbesondere Spinflash- und Sprühtrockner.

Die erfindungsgemäß hergestellten Pigmentzubereitungen zeichnen sich aus durch ihre hervorragenden coloristischen und rheologischen Eigenschaften, insbesondere hohe Flockungsstabilität, leichte Dispergierbarkeit, gute Rheologie, hohe Farbstärke, Transparenz und Sättigung (Chroma). Sie sind in vielen Anwendungsmedien leicht und bis zu hohen Feinheiten dispergierbar. Solche Pigmentdispersionen zeigen hervorragende rheologische Eigenschaften selbst bei hoher Pigmentierung der Lack- oder Druckfarbenkonzentrate. Auch andere Eigenschaften, wie beispielsweise Glanz, Überlackierechtheit, Lösemittelechtheit, Alkali- und Säureechtheit, Licht- und Wetterechtheiten und hohe Reinheit des Farbtons, sind sehr gut. Außerdem lassen sich mit den erfindungsgemäßen Pigmentzubereitungen Farbtöne im roten Bereich erzielen, die beim Einsatz in Farbfiltern gefragt sind. Hier sorgen sie für hohen Kontrast und genügen auch den sonstigen, beim Einsatz in Color Filtern gestellten Anforderungen, wie hohe Temperaturstabilität oder steile und schmale Absorptionsbanden. Die Halbwertsbreite der erfindungsgemäß hergestellten Pigmente beträgt vorzugsweise 40 bis 100 nm, insbesondere 50 bis 85 nm.

Die erfindungsgemäß hergestellten Pigmentzubereitungen lassen sich prinzipiell zum Pigmentieren von allen hochmolekularen organischen Materialien natürlicher oder synthetischer Herkunft einsetzen, beispielsweise von Kunststoffen, Harzen, Lacken, insbesondere Metallic-Lacke, Anstrichfarben, elektrophotographischen Tonern und Entwicklern, Elektretmaterialien, Farbfiltern sowie von Tinten, Druckfarben.

Insbesondere sind die erfindungsgemäß hergestellten Pigmentzubereitungen als Farbmittel in Ink-Jet Tinten auf wässriger und nichtwässriger Basis sowie in solchen Tinten, die nach dem Hot-melt-Verfahren arbeiten, geeignet.

Insbesondere sind die erfindungsgemäß hergestellten Pigmentzubereitungen auch als Farbmittel für Farbfilter, sowohl für die additive wie auch für die subtraktive Farberzeugung, wie beispielsweise in elektro-optischen Systemen wie Fernsehbildschirmen, LCD (liquid crystal displays), charge coupled devices, plasma displays oder electroluminescent displays, die wiederum aktive (twisted nematic) oder passive (supertwisted nematic) ferroelectric displays oder lightemitting diodes sein können, sowie als Farbmittel für elektronische Tinten ("electronic inks" bzw. "e-inks") oder "electronic paper" ("e-paper") geeignet. Bei der Herstellung von Farbfiltern, sowohl reflektierender wie durchsichtiger Farbfilter, werden Pigmente in Form einer Paste oder als pigmentierte Photoresists in geeigneten Bindemitteln (Acrylate, Acrylester, Polyimide, Polyvinylalkohole, Epoxide, Polyester, Melamine, Gelantine, Caseine) auf die jeweiligen LCD-Bauteilen (z.B. TFT-LCD = Thin Film Transistor Liquid Crystal Displays oder z.B. ((S) TN-LCD = (Super) Twisted Nematic-LCD) aufgebracht. Neben einer hohen Thermostabilität ist für eine stabile Paste bzw. einen pigmentierten Photoresist auch eine hohe Pigmentreinheit Voraussetzung. Darüber hinaus können die pigmentierten Color Filter auch durch Ink Jet-Druckverfahren oder andere geeignete Druckverfahren aufgebracht werden.

Die Rotfarbtöne der erfindungsgemäßen Pigmentzubereitungen sind ganz besonders gut geeignet für den Color Filter Farbset Rot-Grün-Blau (R,G,B). Diese drei Farben liegen als getrennte Farbpunkte nebeneinander vor, und ergeben von hinten durchleuchtet ein Vollfarbbild.
Typische Farbmittel für den roten Farbpunkt sind Pyrrolopyrrol-, Chinacridon- und Azopigmente, wie z.B. C.I. Pigment Red 254, C.I. Pigment Red 209, C.I. Pigment Red 175 und C.I. Pigment Orange 38, einzeln oder gemischt. Für den grünen Farbpunkt werden typischerweise Phthalocyaninfarbmittel eingesetzt, wie z.B. C.I. Pigment Green 36 und C.I. Pigment Green 7.
Bei Bedarf können den jeweiligen Farbpunkten noch weitere Farben zum Nuancieren zugemischt werden. Für den Rot- und Grünfarbton wird bevorzugt mit Gelb abgemischt, zum Beispiel mit C.I. Pigment Yellow 138,139,150,151,180 und 213.

In den folgenden Beispielen bedeuten Prozentangaben Gewichtsprozente und Teile Gewichtsteile, sofern nicht anders angegeben.

Zur Bestimmung der Transparenz wurde der pigmentierte Alkyd-Melamin-Einbrennlack als Volltonlack zusammen mit der zu vergleichenden Probe nebeneinander auf eine weiße Pappkarte mit schwarzem Balken aufgezogen und nach 30 min Lufttrocknung für 30 min bei 140 °C eingebrannt. Zur Beurteilung der Transparenz wurde die Deckkraft der beiden aufgezogenen Pigmente über schwarzem Grund verglichen.

Zur Ermittlung des Maximum der Häufigkeitsverteilung (die Mode der Verteilung) der kristallinen Teilchen wurden die erhaltenen Pigmente in einem Alkydmelamin-Lacksystem vollständig dispergiert und die Häufigkeitsverteilung der kristallinen Teilchen in diesem Lacksystem mit Hilfe einer Scheibenzentrifuge ermittelt.

### Meßgerät:

Für die Messungen wurden die Scheibenzentrifugen DC24000 bzw. DC20000 der Fa. CPS Instruments, Inc., Stuart, Florida 34997, USA, verwendet.

Zur Erzielung eines stabilen Sedimentationsverhaltens wurde im Spinfluid der Scheibenzentrifuge ein Dichtegradient eingestellt. Der Dichtegradient wurde durch Mischung von 40 bis 60 Gew.-% Xylol mit der oben erwähnten Lackbasis des Alkydmelamin-Lacksystems eingestellt.

### Durchführung der Messung und Auswertung:

Nach Erreichen der Solldrehzahl von 16000 min⁻¹ Vorlage von 15 ml Spinfluid mit Dichtegradient in der Zentrifugenscheibe. Einspritzen von 0.1 ml Probe (Pigment im Alkydmelamin-Lacksystem vollständig dispergiert). Aufnahme der Sedimentationskurve und Berechnung der Teilchengrößen-Volumenverteilung durch die Software von CPS. Zur korrekten Auswertung unter Berücksichtigung der Mie-Theorie wird der komplexe Brechungsindex des Pigments benötigt. Dieser wurde für 2 Proben durch Ellipsometrie an gepressten Tabletten bei der Fa. L.O.T.-Oriel GmbH in Darmstadt bestimmt. Die ebenso benötigte Dichte der Pigmentteilchen wurde mit einem Gas-Pyknometer (AccuPyc 1330 von Micromeritics) bestimmt.

### Vergleichsbeispiel 1 (Vergleichsbeispiel, Fällung ohne Pigmentdispergator)

31 Teile 4-Chlorbenzonitril werden in 30 %iges Natriumamylat (hergestellt aus 9,3 Teilen Natrium und 143 Teilen Amylalkohol) eingetragen und auf 100 °C erwärmt. 30 Teile Bernsteinsäurediisopropylester werden innerhalb zwei Stunden zugegeben und die erhaltene Pigmentsalzsuspension weitere vier Stunden bei 100 °C nachgerührt.
Das nach diesem Verfahren erhaltene Dinatriumsalz des Pigmentes wird durch Hydrolyse der auf 80°C abgekühlten heißen Dinatriumsalz-Suspension durch Austragen auf 420 Teile neutrales Wasser in das Pigment überführt.
Nach Isolierung und Wäsche mit Methanol und Wasser erhält man ein Pigment, welches ein Maximum der Häufigkeitsverteilung (die Mode der Verteilung) der kristallinen Teilchen von 167 nm besitzt. Die BET-Oberfläche des Pigmentes beträgt 63 m²/g_{.}

### Vergleichsbeispiel 2 (analog EP-A- 962 499)

### 31 Teile 4-Chlorbenzonitril und 1,8 Teile des Pigmentdispergators (V)

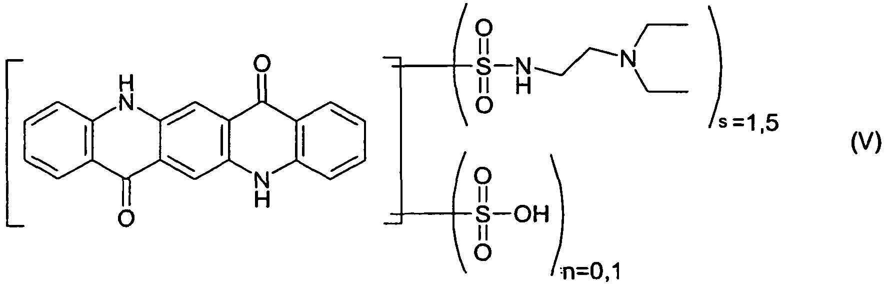

werden in 30 %iges Natriumamylat (hergestellt aus 9,3 Teilen Natrium und 143 Teilen Amylalkohol) eingetragen und auf 100 °C erwärmt. 30 Teile Bernsteinsäurediisopropylester werden innerhalb zwei Stunden zugegeben und die erhaltene Pigmentalkalisalzsuspension weitere vier Stunden bei 100 °C nachgerührt.
Das nach diesem Verfahren erhaltene Dinatriumsalz des Pigmentes wird durch Hydrolyse der auf 80 °C abgekühlten heißen Dinatriumsalz-Suspension durch Austragen auf 420 Teile neutrales 40 °C Wasser in das Pigment überführt. Nach Isolierung und Wäsche mit Methanol und Wasser erhält man ein Pigment, welches ein Maximum der Häufigkeitsverteilung (die Mode der Verteilung) der kristallinen Teilchen von 190 nm besitzt. Die BET-Oberfläche des Pigmentes beträgt 81 m²/g.

### Vergleichsbeispiel 3 (analog EP-A- 962 499)

### 31 Teile 4-Chlorbenzonitril und 1,8 Teile des Pigmentdispergators (VI)

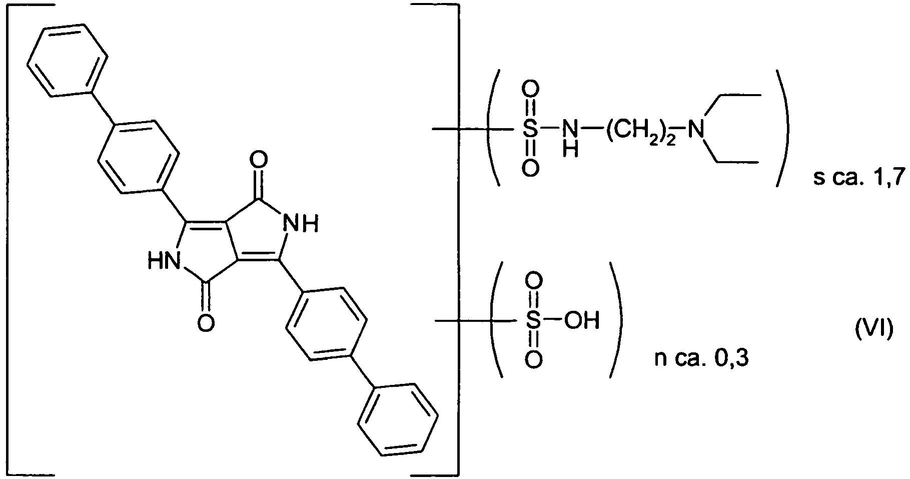

werden in 30 %iges Natriumamylat (hergestellt aus 9,3 Teilen Natrium und 143 Teilen Amylalkohol) eingetragen und auf 100 °C erwärmt. 30 Teile Bernsteinsäurediisopropylester werden innerhalb zwei Stunden zugegeben und die erhaltene Pigmentalkalisalzsuspension weitere vier Stunden bei 100 °C nachgerührt.
Das nach diesem Verfahren erhaltene Dinatriumsalz des Pigmentes wird durch Hydrolyse der auf 80 °C abgekühlten heißen Dinatriumsalz-Suspension durch Austragen auf 420 Teile neutrales Wasser in das Pigment überführt.
Nach Isolierung und Wäsche mit Methanol und Wasser erhält man ein Pigment, welches ein Maximum der Häufigkeitsverteilung (die Mode der Verteilung) der kristallinen Teilchen von 140 nm besitzt. Die BET-Oberfläche des Pigmentes beträgt 88 m²/g.

### Beispiel 1

Das Pigment wird analog Vergleichsbeispiel 1 hergestellt, wobei jedoch das Dinatriumsalz des Pigmentes durch Hydrolyse der 80°C heißen Dinatriumsalz-Suspension durch Austragen auf 420 Teile neutrales Wasser, in dem 3,7 Teile des Pigmentdispergators (VI) dispergiert sind, in das Pigment überführt wird. Nach Isolierung und Wäsche mit Methanol und Wasser erhält man ein Pigment, welches ein Maximum der Häufigkeitsverteilung (die Mode der Verteilung) der kristallinen Teilchen von 79 nm und einer Halbwertsbreite der Häufigkeitsverteilung von 58 nm besitzt. Die BET-Oberfläche des Pigmentes beträgt 130 m²/g.

### Beispiel 2

Das Pigment wird analog Beispiel 1 hergestellt, wobei 1,8 Teile des Pigmentdispergators (VI) im Wasser dispergiert vorliegen.
Nach Isolierung und Wäsche mit Methanol und Wasser erhält man ein Pigment, welches ein Maximum der Häufigkeitsverteilung (die Mode der Verteilung) der kristallinen Teilchen von 110 nm und einer Halbwertsbreite der Häufigkeitsverteilung von 63 nm besitzt. Die BET-Oberfläche des Pigmentes beträgt 100 m²/g.

### Beispiel 3

Das Pigment wird analog Beispiel 1 hergestellt, wobei 3,7 Teile des Pigmentdispergators (VII) im Wasser dispergiert vorliegen.

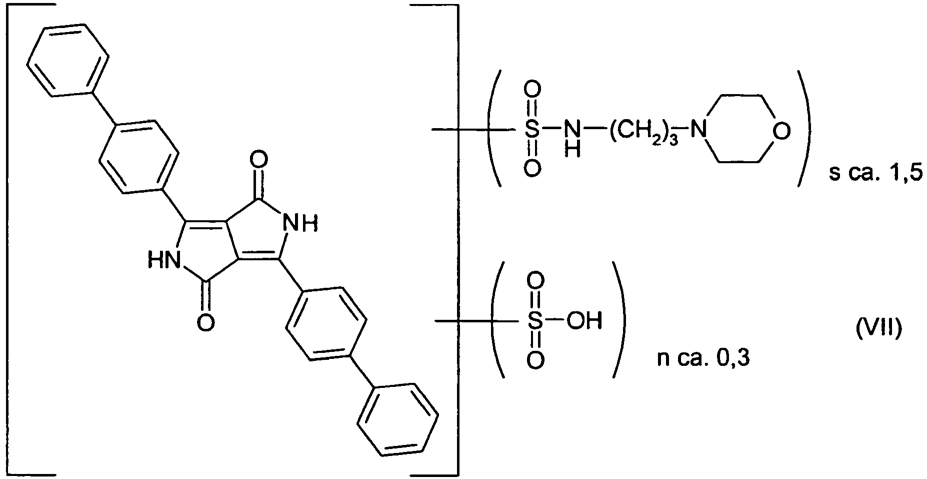

Nach Isolierung und Wäsche mit Methanol und Wasser erhält man ein Pigment, welches ein Maximum der Häufigkeitsverteilung (die Mode der Verteilung) der kristallinen Teilchen von 100 nm und einer Halbwertsbreite der Häufigkeitsverteilung von 79 nm besitzt. Die BET-Oberfläche des Pigmentes beträgt 107 m²/g.

### Beispiel 4

Das Pigment wird analog Beispiel 3 hergestellt, wobei 1,8 Teile des Pigmentdispergators (VII) im Wasser dispergiert vorliegen.
Nach Isolierung und Wäsche mit Methanol und Wasser erhält man ein Pigment, welches ein Maximum der Häufigkeitsverteilung (die Mode der Verteilung) der kristallinen Teilchen von 110 nm und einer Halbwertsbreite der Häufigkeitsverteilung von 89 nm besitzt. Die BET-Oberfläche des Pigmentes beträgt 93 m²/g.

### Beispiel 5

Das Pigment wird analog Beispiel 1 hergestellt, wobei 3,7 Teile des Pigmentdispergators (VIII) im Wasser dispergiert vorliegen.

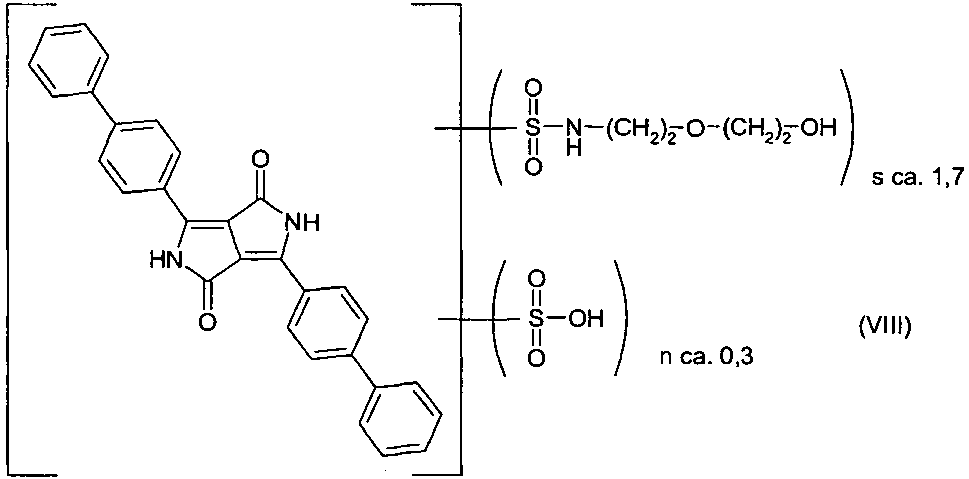

Nach Isolierung und Wäsche mit Methanol und Wasser erhält man ein Pigment, welches ein Maximum der Häufigkeitsverteilung (die Mode der Verteilung) der kristallinen Teilchen von 118 nm und einer Halbwertsbreite der Häufigkeitsverteilung von 85 nm besitzt. Die BET-Oberfläche des Pigmentes beträgt 95 m²/g.

### Beispiel 6

Das Pigment wird analog Beispiel 5 hergestellt, wobei 1,8 Teile des Pigmentdispergators (VIII) im Wasser dispergiert vorliegen.
Nach Isolierung und Wäsche mit Methanol und Wasser erhält man ein Pigment, welches ein Maximum der Häufigkeitsverteilung (die Mode der Verteilung) der kristallinen Teilchen von 121 nm und einer Halbwertsbreite der Häufigkeitsverteilung von 93 nm besitzt. Die BET-Oberfläche des Pigmentes beträgt 91 m²/g.

### Beispiel 7

Das Pigment wird analog Beispiel 1 hergestellt, wobei 3,7 Teile des Pigmentdispergators (IX) im Wasser dispergiert vorliegen.

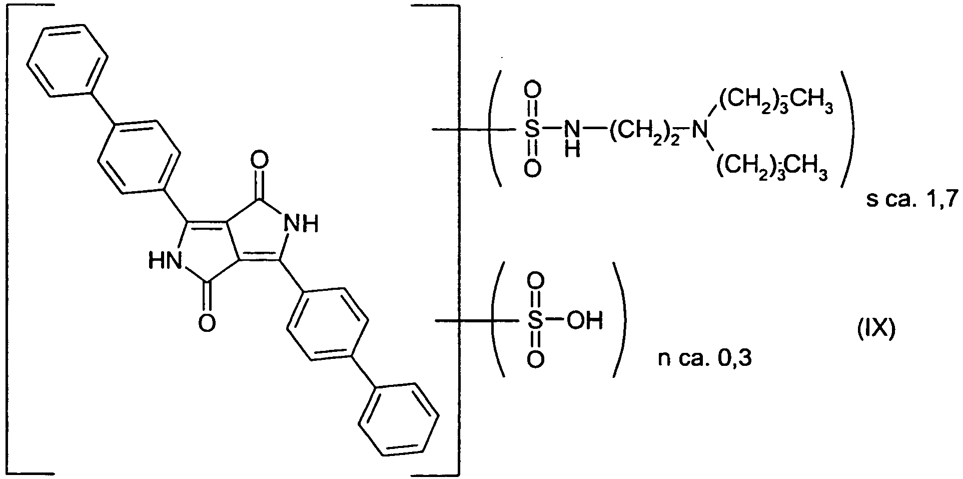

Nach Isolierung und Wäsche mit Methanol und Wasser erhält man ein Pigment, welches ein Maximum der Häufigkeitsverteilung (die Mode der Verteilung) der kristallinen Teilchen von 89 nm und einer Halbwertsbreite der Häufigkeitsverteilung von 57 nm besitzt. Die BET-Oberfläche des Pigmentes beträgt 115 m²/g.

### Beispiel 8

Das Pigment wird analog Beispiel 7 hergestellt, wobei 1,8 Teile des Pigmentdispergators (IX) im Wasser dispergiert vorliegen.
Nach Isolierung und Wäsche mit Methanol und Wasser erhält man ein Pigment, welches ein Maximum der Häufigkeitsverteilung (die Mode der Verteilung) der kristallinen Teilchen von 95 nm und einer Halbwertsbreite der Häufigkeitsverteilung von 67 nm besitzt. Die BET-Oberfläche des Pigmentes beträgt 107 m²/g.

### Beispiel 9 (Vergleich)

Das Pigment wird analog Beispiel 1 hergestellt, wobei 3,7 Teile des Pigmentdispergators (X) im Wasser dispergiert vorliegen.

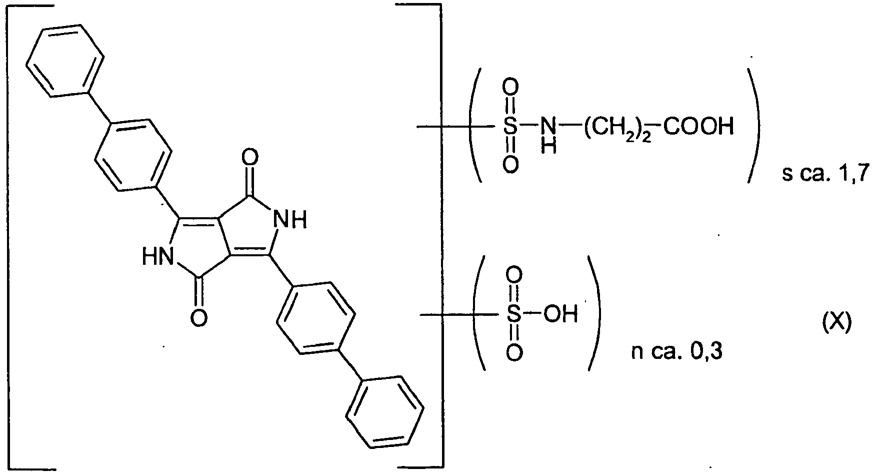

Nach Isolierung und Wäsche mit Methanol und Wasser erhält man ein Pigment, welches ein Maximum der Häufigkeitsverteilung (die Mode der Verteilung) der kristallinen Teilchen von 120 nm und einer Halbwertsbreite der Häufigkeitsverteilung von 99 nm besitzt. Die BET-Oberfläche des Pigmentes beträgt 85 m²/g.

### Beispiel 10

Das Pigment wird analog Beispiel 1 hergestellt, wobei 3,7 Teile des Pigmentdispergators (XI) im Wasser dispergiert vorliegen.

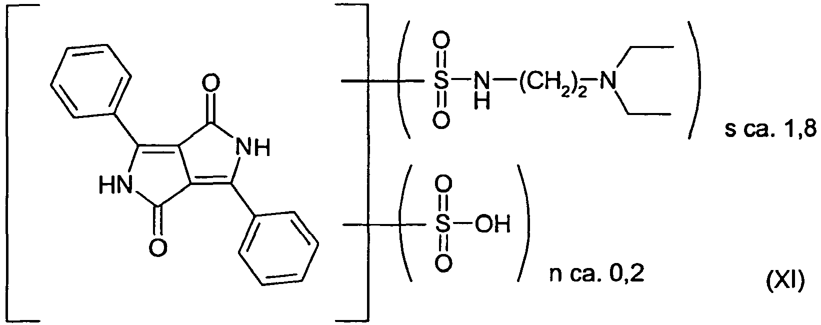

Nach Isolierung und Wäsche mit Methanol und Wasser erhält man ein Pigment, welches ein Maximum der Häufigkeitsverteilung (die Mode der Verteilung) der kristallinen Teilchen von 82 nm und einer Halbwertsbreite der Häufigkeitsverteilung von 62 nm besitzt. Die BET-Oberfläche des Pigmentes beträgt 124 m²/g.

### Beispiel 11

Das Pigment wird analog Beispiel 10 hergestellt, wobei 1,8 Teile des Pigmentdispergators (XI) im Wasser dispergiert vorliegen.
Nach Isolierung und Wäsche mit Methanol und Wasser erhält man ein Pigment, welches ein Maximum der Häufigkeitsverteilung (die Mode der Verteilung) der kristallinen Teilchen von 91 nm und einer Halbwertsbreite der Häufigkeitsverteilung von 65 nm besitzt. Die BET-Oberfläche des Pigmentes beträgt 109 m²/g.

### Beispiel 12

Das Pigment wird analog Beispiel 1 hergestellt, wobei das Dinatriumsalz des Pigmentes durch Hydrolyse der 80 °C heißen Dinatriumsalz-Suspension durch Austragen auf 420 Teile neutrales Wasser, in dem 3,7 Teile des Pigmentdispergators (V) dispergiert vorliegen, in das Pigment überführt wird. Nach Isolierung und Wäsche mit Methanol und Wasser erhält man ein Pigment, welches ein Maximum der Häufigkeitsverteilung (die Mode der Verteilung) der kristallinen Teilchen von 125 nm und einer Halbwertsbreite der Häufigkeitsverteilung von 94 nm besitzt. Die BET-Oberfläche des Pigmentes beträgt 92 m²/g.

### Beispiel 13

Das Pigment wird analog Beispiel 12 hergestellt, wobei 1,8 Teile des Pigmentdispergators (V) im Wasser dispergiert vorliegen.
Nach Isolierung und Wäsche mit Methanol und Wasser erhält man ein Pigment, welches ein Maximum der Häufigkeitsverteilung (die Mode der Verteilung) der kristallinen Teilchen von 121 nm und einer Halbwertsbreite der Häufigkeitsverteilung von 85 nm besitzt. Die BET-Oberfläche des Pigmentes beträgt 91 m²/g.

Die Transparenz in einem Alkyd-Melamin-Einbrennlack der in den vorstehenden Beispielen hergestellten Pigmente ist in der nachfolgenden Tabelle angegeben. Als Standard für die Transparenz wurde das Pigment aus Vergleichsbeispiel 1 herangezogen.

Die Transparenz wurde dabei wie folgt beurteilt.
- +VI: bedeutend deckender
- +V: wesentlich deckender
- +IV: deutlich deckender
- +III: merklich deckender
- +II: etwas deckender
- +I: eine Spur deckender
- /=/: etwa wie
- -I: eine Spur transparenter
- -II: etwas transparenter
- -III: merklich transparenter
- -IV: deutlich transparenter
- -V: wesentlich transparenter
- -VI: bedeutend transparenter

| Probe | Transparenz |
|---|---|
| Vergleichsbeispiel 1 | Referenz |
| Vergleichsbeispiel 2 | -I / eine Spur transparenter |
| Vergleichsbeispiel 3 | -II / etwas transparenter |
| Beispiel 1 | -VI / bedeutend transparenter |
| Beispiel 2 | -V / wesentlich transparenter |
| Beispiel 3 | -V / wesentlich transparenter |
| Beispiel 4 | -V / wesentlich transparenter |
| Beispiel 5 | -VI / bedeutend transparenter |
| Beispiel 6 | -V / wesentlich transparenter |
| Beispiel 7 | -VI / bedeutend transparenter |
| Beispiel 8 | -VI / bedeutend transparenter |
| Beispiel 9* | -IV / deutlich transparenter |
| Beispiel 10 | -V / wesentlich transparenter |
| Beispiel 11 | -V / wesentlich transparenter |
| Beispiel 12 | -IV / deutlich transparenter |
| Beispiel 13 | -IV / deutlich transparenter |

| | |
|---|---|
| * Vergleichsbeispiel | |

## Patentansprüche

1. Verfahren zur direkten Herstellung von feinteiligen 1,4-diketopyrrolo[3,4-c]pyrrolen der Formel (I), **gekennzeichnet durch** ein Maximum der Häufigkeitsverteilung der kristallinen Teilchen zwischen 30 und 130 nm, 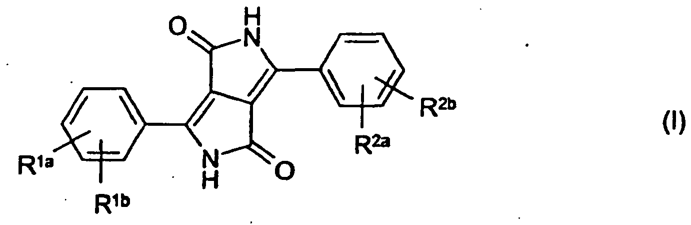 worin R^{1a}, R^{1b}, R^{2a} und R^{2b} unabhängig voneinander Wasserstoff, Halogen, C₁-C₄-Alkyl, C₁-C₄-Alkoxy, Cyano oder Phenyl bedeuten; **durch** Umsetzung von 1 Mol eines Bernsteinsäuredicyclohexylesters, -dialkylesters, -monoalkylmonophenylesters, oder -diphenylesters, wobei im Bernsteinsäurerest Alkyl C₁-C₁₈-Alkyl und Phenyl unsubstituiertes oder **durch** ein oder zwei C₁-C₆-Alkyl- oder C₁-C₆-Alkoxygruppen substituiertes Phenyl bedeuten, mit 2 Mol eines Gemisches von Nitrilen der Formeln R^{1a}R^{1b}C₆H₃-CN und R^{2a}R^{2b}C₆H₃-CN, wobei im Nitrilgemisch R^{1a}R^{1b}C₆H₃-CN und R^{2a}R^{2b}C₆H₃-CN im Molverhältnis 100:0 bis 50:50 zueinander stehen;
oder **durch** Umsetzung von 1 Mol eines Lactams der Formel (III) oder eines Enamins der Formel (IV), 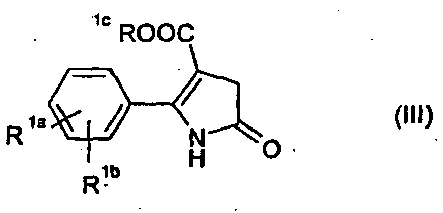 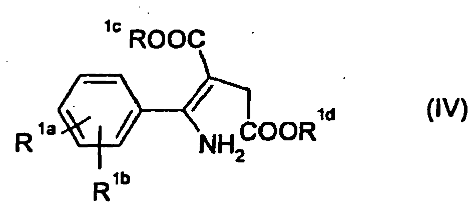 mit einem Mol eines Nitrils der Formel R^{2a}R^{2b}C₆H₃-CN; worin R^{1c} und R^{1d} Alkyl oder Aryl, bevorzugt C₁-C₁₈-Alkyl oder C₆-C₁₀-Aryl, bedeuten;
in einem inerten organischen Lösungsmittel in Gegenwart eines Alkalimetalls oder eines Alkalimetallalkoholats als starke Base bei erhöhter Temperatur zu einem Pigmentalkalisalz, anschließende Freisetzung einer Verbindung der Formel (I) durch Protolyse, welche **dadurch** gekennzeichnet ist, dass das Pigmentalkalisalz zu einem flüssigen Protolysemedium, in dem ein Pigmentdispergator der Formel (II) gelöst oder suspendiert ist, gegeben wird, und wobei die Menge des zugesetzten Pigmentdispergators der Formel (II) mindestens 0,05 Gew.-%, bezogen auf das Gewicht des Pigments der Formel (I), beträgt 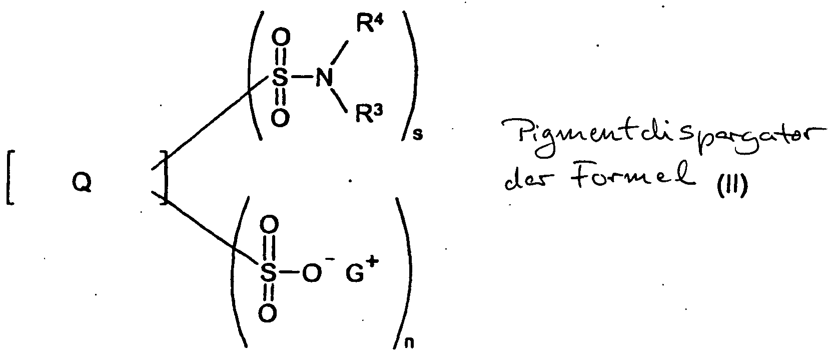
Q ein Rest eines organischen Pigments aus der Gruppe der Perinon-, Chinacridon-, Chinacridonchinon-, Anthanthron-, Indanthron-, Dioxazin-, Diketopyrrolopyrrol-, Indigo-, Thioindigo-, Thiazinindigo-, Isoindolin-, Isoindolinon-, Pyranthron-, Isoviolanthron-, Flavanthron- oder Anthrapyrimidin-Pigmente ist;
s eine Zahl von 1 bis 5 darstellt;
n eine Zahl von 0 bis 4 darstellt; wobei die Summe von s und n 1 bis 5 beträgt;
R³ einen verzweigten oder unverzweigten, gesättigten oder ungesättigten, aliphatischen Kohlenwasserstoffrest mit 1 bis 20 C-Atomen, oder einen C₅-C₇-Cycloalkylrest, oder einen araliphatischen oder aromatischen Rest mit 1, 2 oder 3 aromatischen Ringen, wobei die Ringe kondensiert vorliegen oder **durch** eine Bindung verknüpft sein können, oder einen heterocyclischen Rest mit 1, 2 oder 3 Ringen, enthaltend 1, 2, 3 oder 4 Heteroatome aus der Gruppe O, N und S, oder eine Kombination davon bedeutet; wobei die genannten Kohlenwasserstoff-, Cycloalkyl-, Aromaten-, Araliphaten- und Heteroaromaten-Reste **durch** 1, 2, 3 oder 4 Substituenten aus der Gruppe OH, CN, F, Cl, Br, NO₂, CF₃, C₁-C₆-Alkoxy, S-C₁-C₆-Alkyl, NHCONH₂, NHC(NH)NH₂, NHCO-C₁-C₆-Alkyl, C₁-C₆-Alkyl, CONR⁵R⁶, NR⁵R⁶, SO₂-NR⁵R⁶, substituiert sein können, wobei R⁵ und R⁶ gleich oder verschieden sind und Wasserstoff, Phenyl oder C₁-C₆-Alkyl bedeuten;
R⁴ Wasserstoff oder R³ bedeutet;
G⁺ H⁺ oder das Äquivalent M^{p+}/m eines Metallkations M^{p+} aus der 1. bis 5. Hauptgruppe oder aus der 1. oder 2. oder der 4. bis 8. Nebengruppe des Periodensystems der chemischen Elemente bezeichnet, wobei m eine der Zahlen 1, 2 oder 3 und p die Zahl 1, 2 oder 3 bedeutet; oder ein substituiertes oder unsubstituiertes Ammoniumion bezeichnet.

2. Verfahren nach Anspruch 1, **dadurch gekennzeichnet, dass** R^{1a}, R^{1b}, R^{2a} und R^{2b} unabhängig voneinander Wasserstoff, Chlor, Brom, Methyl, Ethyl, tert.-Butyl, Methoxy, Cyano oder Phenyl bedeuten.

3. Verfahren nach Anspruch 1 oder 2, **dadurch gekennzeichnet, dass** das Pigment der Formel (I) C.I. Pigment Orange 71, 73, 81, Pigment Red 254, 255, 264, 270 oder 272 bedeutet.

4. Verfahren nach einem oder mehreren der Ansprüche 1 bis 3, **dadurch gekennzeichnet, dass**
Q ein Rest eines organischen Pigments aus der Gruppe der Chinacridon-, Dioxazin- oder Diketopyrrolopyrrol-Pigmente;
R³ C₁-C₆-Alkyl, Benzyl, Phenyl, die jeweils durch 1, 2, 3 oder 4 Substituenten aus der Gruppe OH, C₁-C₆-Alkoxy, S-C₁-C₆-Alkyl, NHCONH₂, NHC(NH)NH₂, NHCO-C₁-C₆-Alkyl, C₁-C₆-Alkyl, CONR⁵R⁶, NR⁵R⁶, SO₂-NR⁵R⁶ substituiert sein können, wobei R⁵ und R⁶ gleich oder verschieden sind und Wasserstoff, Phenyl oder C₁-C₆-Alkyl bedeuten;
R⁴ Wasserstoff,
G⁺ Wasserstoff, ein Erdalkalimetall oder ein Alkalimetall oder ein Metall der dritten Hauptgruppe, oder ein Ammoniumion bedeuten.

5. Verfahren nach einem oder mehreren der Ansprüche 1 bis 4, **dadurch gekennzeichnet, dass**
Q ein Rest eines organischen Pigments aus der Gruppe C.I. Pigment Red 255 oder 264;
R³ C₁-C₆-Alkyl, das durch 1, 2, 3 oder 4 Substituenten aus der Gruppe NHCONH₂, NHC(NH)NH₂, NHCO-C₁-C₆-Alkyl, NR⁵R⁶, substituiert sein kann, wobei R⁵ und R³ gleich oder verschieden sind und Wasserstoff, Phenyl oder C₁-C₆-Alkyl bedeuten;
R⁴ Wasserstoff,
G⁺ Wasserstoff, Li, Na, K, Ca, Sr, Ba, Al oder ein Ammoniumion bedeuten.

6. Verfahren nach einem oder mehreren der Ansprüche 1 bis 5, **dadurch gekennzeichnet, dass** das Protolysemedium Wasser, eine wässrige Säurelösung, ein niederer Alkohol oder eine Kombination davon ist.

7. Verfahren nach einem oder mehreren der Ansprüche 1 bis 6, **dadurch gekennzeichnet, dass** das Protolysemedium neutrales Wasser, eine Mischung von Methanol und Wasser oder Wasser bei pH < 5.

8. Verfahren nach einem oder mehreren der Ansprüche 1 bis 7, **dadurch gekennzeichnet, dass** das Gewichtsverhältnis von Pigment der Formel (I) zum Pigmentdispergator der Formel (II) zwischen (99,9 zu 0,1) und (80 zu 20) liegt.

9. Verfahren nach einem oder mehreren der Ansprüche 1 bis 8, **dadurch gekennzeichnet, dass** das Gewichtsverhältnis von Pigment der Formel (I) zum Pigmentdispergator der Formel (II) zwischen (95 zu 5) und (85 zu 15) liegt.

10. Verfahren nach einem oder mehreren der Ansprüche 1 bis 9, **dadurch gekennzeichnet, dass** die Protolyse bei einer Temperatur des Pigmentalkalisalzes von 20 bis 120 °C durchgeführt wird.

11. Verfahren nach einem oder mehreren der Ansprüche 1 bis 10, **dadurch gekennzeichnet, dass** das flüssige Protolysemedium eine Temperatur von 0 bis 60 °C hat.

## Claims

1. A process for direct production of finely divided 1,4-diketopyrrolo[3,4-c]pyrroles of formula (I) **characterized by** a maximum of the frequency distribution of the crystalline particles between 30 and 130 nm, 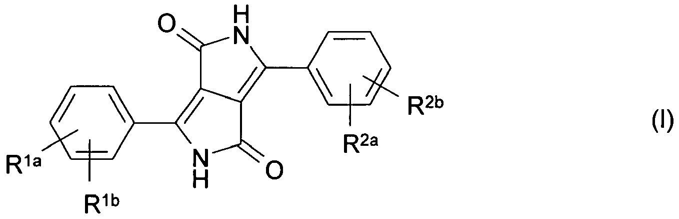 where R^{1a}, R^{1b}, R^{2a} and R^{2b} are independently hydrogen, halogen, C₁-C₄-alkyl, C₁-C₄-alkoxy, cyano or phenyl; by reaction of 1 mol of a dicyclohexyl succinate, dialkyl succinate, monoalkyl monophenyl succinate or diphenyl succinate ester in which alkyl in the succinic ester is C₁-C₁₈-alkyl and phenyl in the succinic ester is unsubstituted phenyl or phenyl substituted by one or two C₁-C₆-alkyl or C₁-C₆-alkoxy groups, with 2 mol of a mixture of nitriles of the formulae R^{1a}R^{1b}C₆H₃-CN and R^{2a}R^{2b}C₆H₃-CN, the molar ratio between R^{1a}R^{1b}C₆H₃-CN and R^{2a}R^{2b}C₆H₃-CN in the nitrile mixture being in the range from 100:0 to 50:50;
or by reaction of 1 mol of a lactam of formula (III) or of an enamine of formula (IV) 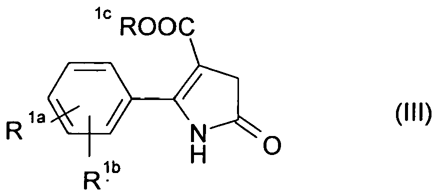 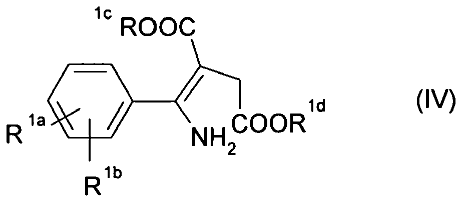 with one mole of a nitrile of the formula R^{2a}R^{2b}C₆H₃-CN; where R^{1c} and R^{1d} are each alkyl or aryl, preferably C₁-C₁₈-alkyl or C₆-C₁₀-aryl;
in an inert organic solvent in the presence of an alkali metal or of an alkali metal alkoxide as a strong base at elevated temperature to form a pigment alkali metal salt and subsequent release of a compound of formula (I) by protolysis which is **characterized in that** the pigment alkali metal salt is added to a liquid protolysis medium in which a pigmentary dispersant of formula (II) has been dissolved or suspended, the amount added of the pigmentary dispersant of formula (II) being at least 0.05% by weight, based on the weight of the pigment of formula (I) 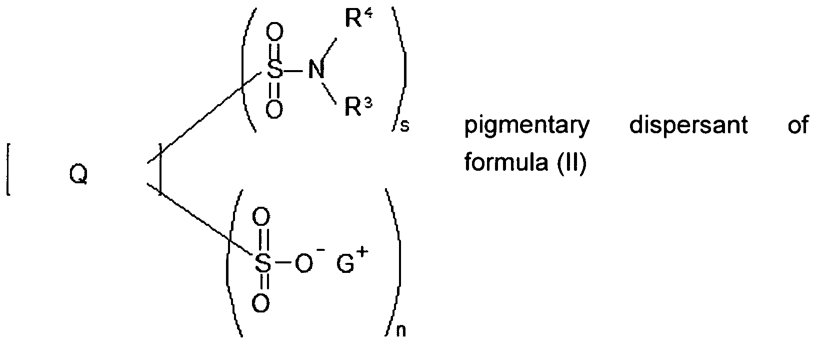 where
Q is a residue of an organic pigment from the group of the perinone, quinacridone, quinacridonequinone, anthanthrone, indanthrone, dioxazine, diketopyrrolopyrrole, indigo, thioindigo, thiazineindigo, isoindoline, isoindolinone, pyranthrone, isoviolanthrone, flavanthrone or anthrapyrimidine pigments;
s is from 1 to 5;
n is from 0 to 4; subject to the proviso that the sum total of s and n is from 1 to 5;
R³ is a branched or unbranched, saturated or unsaturated, aliphatic hydrocarbyl radical having 1 to 20 carbon atoms or a C₅-C₇-cycloalkyl radical or an araliphatic or aromatic radical having 1, 2 or 3 aromatic rings, which rings may be fused or linked by a bond, or a heterocyclic radical having 1, 2 or 3 rings containing 1, 2, 3 or 4 hetero atoms from the group consisting of O, N and S, or a combination thereof; wherein the recited hydrocarbyl, cycloalkyl, aromatics, araliphatics and heteroaromatics radicals may be substituted by 1, 2, 3 or 4 substituents from the group consisting of OH, CN, F, Cl, Br, NO₂, CF₃, C₁-C₆-alkoxy, S-C₁-C₆-alkyl, NHCONH₂, NHC(NH)NH₂, NHCO-C₁-C₆-alkyl, C₁-C₆-alkyl, CONR⁵R⁶, NR⁵R⁶, SO₂-NR⁵R⁶, where R⁵ and R⁶, which are the same or different, are each hydrogen, phenyl or C₁-C₆-alkyl;
R⁴ is hydrogen or R³;
G⁺ is H⁺ or the equivalent M^{p+}/m of a metal cation M^{p+} from the 1^{st} to 5^{th} main group or from the 1^{st} or 2^{nd} or the 4^{th} to 8^{th} transition group of the periodic table of the chemical elements, where m is one of 1, 2 or 3 and p is 1, 2 or 3; or a substituted or unsubstituted ammonium ion.

2. The process as claimed in claim 1, **characterized in that** R^{1a}, R^{1b}, R^{2a} and R^{2b} are independently hydrogen, chlorine, bromine, methyl, ethyl, tert-butyl, methoxy, cyano or phenyl.

3. The process as claimed in claim 1 or 2, **characterized in that** the pigment of formula (I) is C.I. Pigment Orange 71, 73, 81, Pigment Red 254, 255, 264, 270 or 272.

4. The process as claimed in one or more of claims 1 to 3, **characterized in that**
Q is a residue of an organic pigment from the group of the quinacridone, dioxazine or diketopyrrolopyrrole pigments;
R³ is C₁-C₆-alkyl, benzyl, phenyl, which may each be substituted by 1, 2, 3 or 4 substituents from the group consisting of OH, C₁-C₆-alkoxy, S-C₁-C₆-alkyl, NHCONH₂, NHC(NH)NH₂, NHCO-C₁-C₆-alkyl, C₁-C₆-alkyl, CONR⁵R⁶, NR⁵R⁶, SO₂-NR⁵R⁶, where R⁵ and R⁶, which are the same or different, are each hydrogen, phenyl or C₁-C₆-alkyl;
R⁴ is hydrogen,
G⁺ are each hydrogen, an alkaline earth metal or an alkali metal or a metal of the third main group, or an ammonium ion.

5. The process as claimed in one or more of claims 1 to 4, **characterized in that**
Q is a residue of an organic pigment from the group consisting of C.I. Pigment Red 255 or 264;
R³ is C₁-C₆-alkyl, which may be substituted by 1, 2, 3 or 4 substituents from the group consisting of NHCONH₂, NHC(NH)NH₂, NHCO-C₁-C₆-alkyl, NR⁵R⁶, where R⁵ and R⁶, which are the same or different, are each hydrogen, phenyl or C₁-C₆-alkyl;
R⁴ is hydrogen,
G⁺ are each hydrogen, Li, Na, K, Ca, Sr, Ba, Al or an ammonium ion.

6. The process as claimed in one or more of claims 1 to 5, **characterized in that** the protolysis medium is water, an aqueous solution of an acid, a lower alcohol or a combination thereof.

7. The process as claimed in one or more of claims 1 to 6, **characterized in that** the protolysis medium is neutral water, a mixture of methanol and water or water at pH < 5.

8. The process as claimed in one or more of claims 1 to 7, **characterized in that** the weight ratio of pigment of formula (I) to pigmentary dispersant of formula (II) is between (99.9 to 0.1) and (80 to 20).

9. The process as claimed in one or more of claims 1 to 8, **characterized in that** the weight ratio of pigment of formula (I) to pigmentary dispersant of formula (II) is between (95 to 5) and (85 to 15).

10. The process as claimed in one or more of claims 1 to 9, **characterized in that** the protolysis is carried out at a temperature of 20 to 120°C for the pigment alkali metal salt.

11. The process as claimed in one or more of claims 1 to 10, **characterized in that** the liquid protolysis medium has a temperature of 0 to 60°C.

## Revendications

1. Procédé pour la préparation directe de 1,4-dicétopyrrolo[3,4-c]pyrroles de formule (I) finement divisés, **caractérisés par** un maximum de la distribution de fréquence des particules cristallines entre 30 et 130 nm, 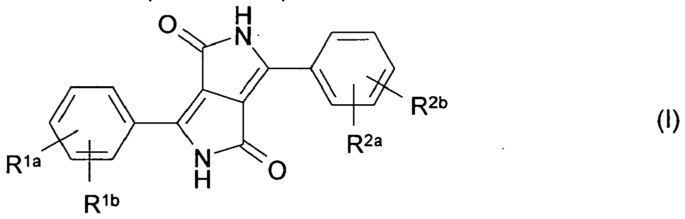 formule dans laquelle R^{1a}, R^{1b}, R^{2a} et R^{2b} représentent, indépendamment les uns des autres, un atome d'hydrogène ou d'halogène, un groupe alkyle en C₁-C₄, alcoxy en C₁-C₄, cyano ou phényle ; par mise en réaction de 1 mole d'un succinate de dicyclohexyle, dialkyle, monoalkylmonophényle ou diphényle, dans l'ester d'acide succinique alkyle signifiant alkyle en C₁-C₁₈ et phényle signifiant phényle non substitué ou substitué par un ou deux groupes alkyle en C₁-C₆ ou alcoxy en C₁-C₆, avec 2 moles d'un mélange de nitriles de formules R^{1a}R^{1b}C₆H₃-CN et R^{2a}R^{2b}C₆H₃-CN, dans le mélange de nitriles R^{1a}R^{1b}C₆H₃-CN et R^{2a}R^{2b}C₆H₃-CN se trouvant en un rapport de l'un à l'autre de 100:0 à 50:50 ;
ou par mise en réaction de 1 mole d'un lactame de formule (III) ou d'une énamine de formule (IV), 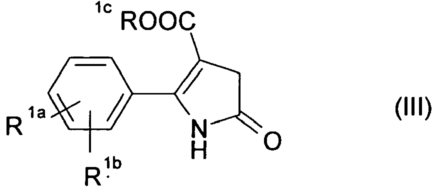 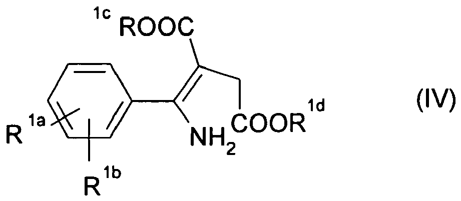 avec une mole d'un nitrile de formule R^{2a}R^{2b}C₆H₃-CN ; formules dans lesquelles R^{1c} et R^{1d} représentent un groupe alkyle ou aryle, de préférence alkyle en C₁-C₁₈ ou aryle en C₆-C₁₀ ;
dans un solvant organique inerte, en présence d'un métal alcalin ou d'un alcoolate de métal alcalin en tant que base forte, à température élevée, pour l'obtention d'un sel alcalin de pigment, libération subséquente d'un composé de formule (I) par protolyse, qui est **caractérisé en ce qu'**on ajoute le sel alcalin de pigment à un milieu liquide de protolyse, dans lequel est dissous ou mis en suspension un dispersant pigmentaire de formule (II), et la quantité du dispersant pigmentaire de formule (II) qui est ajouté étant d'au moins 0,05 %, par rapport au poids du pigment de formule (I), 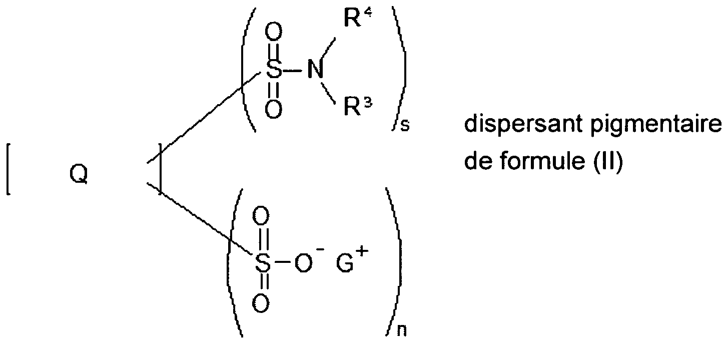 formule dans laquelle
Q représente un reste d'un pigment organique choisi dans le groupe des pigments périnone, quinacridone, quinacridonequinone, anthanthrone, indanthrone, dioxazine, dicétopyrrolopyrrole, indigo, thio-indigo, thiazine-indigo, iso-indoline, iso-indolinone, pyranthrone, isoviolanthrone, flavanthrone ou anthrapyrimidine ;
s représente un nombre valant de 1 à 5 ;
n représente un nombre valant de 0 à 4 ; la somme de s et n valant de 1 à5;
R³ représente un radical hydrocarboné aliphatique ramifié ou non ramifié, saturé ou insaturé, ayant de 1 à 20 atomes de carbone, ou un radical cycloalkyle en C₅-C₇, ou un radical araliphatique ou aromatique comportant 1, 2 ou 3 noyaux aromatiques, les noyaux pouvant être condensés ou liés par une liaison, ou un radical hétérocyclique à 1, 2 ou 3 cycles, contenant 1, 2, 3 ou 4 hétéroatomes choisis dans le groupe constitué par O, N et S, ou une combinaison de ceux-ci ; lesdits radicaux hydrocarbonés, cycloalkyle, aromatiques, araliphatiques et hétéroaromatiques pouvant porter 1, 2, 3 ou 4 substituants choisis dans l'ensemble constitué par OH, CN, F, CI, Br, NO₂, CF₃, alcoxy en C₁-C₆, S-alkyle(C₁-C₆), NHCONH₂, NHC(NH)NH₂, NHCO-alkyle(C₁-C₆), alkyle en C₁-C₆, CONR⁵R⁶, NR⁵R⁶, SO₂-NR⁵R⁶, R⁵ et R⁶ étant identiques ou différents et représentant un atome d'hydrogène, un groupe phényle ou alkyle en C₁-C₆ ;
R⁴ représente un atome d'hydrogène ou R³ ;
G⁺ représente H⁺ ou l'équivalent M^{p+}/m d'un cation métallique M^{p+} choisi dans les groupes 1A à 5A ou dans le groupe 1 B ou 2B ou les groupes 4B à 8B du système périodique des éléments chimiques, m représentant l'un des nombres 1, 2 ou 3 et p représentant le nombre 1, 2 ou 3 ; ou un ion ammonium substitué ou non substitué.

2. Procédé selon la revendication 1, **caractérisé en ce que** R^{1a}, R^{1b}, R^{2a} et R^{2b} représentent indépendamment les uns des autres un atome d'hydrogène, de chlore, de brome, un groupe méthyle, éthyle, tert-butyle, méthoxy, cyano ou phényle.

3. Procédé selon la revendication 1 ouu 2, **caractérisé en ce que** le pigment de formule (I) représente C.I. Pigment Orange 71, 73, 81, Pigment Red 254, 255, 264, 270 ou 272.

4. Procédé selon une ou plusieurs des revendications 1 à 3, **caractérisé en ce que**
Q représente un reste d'un pigment organique choisi dans le groupe des pigments quinacridone, dioxazine ou dicétopyrrolopyrrole ;
R³ représente un groupe alkyle en C₁-C₆, benzyle, phényle, qui peuvent être substitués chacun par 1, 2, 3 ou 4 substituants choisis dans l'ensemble constitué par OH, alcoxy en C₁-C₆, S-alkyle(C₁-C₆), NHCONH₂, NHC(NH)NH₂, NHCO-alkyle(C₁-C₆), alkyle en C₁-C₆, CONR⁵R⁶ NR⁵R⁶, SO₂-NR⁵R⁶, R⁵ et R⁶ étant identiques ou différents et représentant un atome d'hydrogène, un groupe phényle ou alkyle en C₁-C₆ ;
R⁴ représente un atome d'hydrogène,
G⁺ représente un atome d'hydrogène, un métal alcalino-terreux ou un métal alcalin ou un métal du groupe 3A, ou un ion ammonium.

5. Procédé selon une ou plusieurs des revendications 1 à 4, **caractérisé en ce que**
Q représente un reste d'un pigment organique choisi dans le groupe constitué par C.I. Pigment Red 255 et 264 ;
R³ représente un groupe alkyle en C₁-C₆ qui peut être substitué par 1, 2, 3 ou 4 substituants choisis dans l'ensemble constitué par NHCONH₂, NHC(NH)NH₂, NHCO-alkyle(C₁-C₆), NR⁵R⁶, R⁵ et R⁶ étant identiques ou différents et représentant un atome d'hydrogène, un groupe phényle ou alkyle en C₁-C₆ ;
R⁴ représente un atome d'hydrogène,
G⁺ représente un atome d'hydrogène, Li, Na, K, Ca, Sr, Ba, Al ou un ion ammonium.

6. Procédé selon une ou plusieurs des revendications 1 à 5, **caractérisé en ce que** le milieu de protolyse est l'eau, une solution aqueuse d'un acide, un alcool inférieur ou une association de ceux-ci.

7. Procédé selon une ou plusieurs des revendications 1 à 6, **caractérisé en ce que** le milieu de protolyse est l'eau neutre, un mélange de méthanol et d'eau ou de l'eau à pH < 5.

8. Procédé selon une ou plusieurs des revendications 1 à 7, **caractérisé en ce que** le rapport pondéral du pigment de formule (I) au dispersant pigmentaire de formule (II) est compris entre (99,9:0,1) et (80:20).

9. Procédé selon une ou plusieurs des revendications 1 à 8, **caractérisé en ce que** le rapport pondéral du pigment de formule (I) au dispersant pigmentaire de formule (II) est compris entre (95:5) et (85:15).

10. Procédé selon une ou plusieurs des revendications 1 à 9, **caractérisé en ce que** la protolyse est effectuée à une température du sel alcalin de pigment de 20 à 120 °C.

11. Procédé selon une ou plusieurs des revendications 1 à 10, **caractérisé en ce que** le milieu liquide de protolyse a une température de 0 à 60°C.
